# FASCICULE DE BREVET EUROPEEN

(11) **EP 0 690 265 B1**
(45) Date de publication et mention de la délivrance du brevet: **08.09.1999**
(21) Numéro de dépôt: 95440034.7
(22) Date de dépôt: 28.06.1995
(51) Int. Cl.: F23G 5/44, F23G 7/12, B65G 47/19

(54) **Installation et procédé d'alimentation d'un four de cimenterie en déchets, notamment en pneus usagés**
Einrichtung und Verfahren zur Zuführung von Abfällen zu einem Zementofen, insbesondere Altreifen
Apparatus and method for supplying waste to a cement oven, in particular snap tires

(30) Priorité: 28.06.1994 FR 9408128
(43) Date de publication de la demande: 03.01.1996
(73) Titulaire: SOCIETE ALSACIENNE D'APPAREILS DE MANUTENTION MECANIQUE, 67400 Illkirch-Graffenstaden (FR)
(72) Inventeur: Zuber, Jean-Marc, 67100 Strasbourg (FR); Wintz, Michel, 67400 Illkirch-Graffenstaden (FR)
(74) Mandataire: Metz, Paul

(56) Documents cités:
- EP-A- 0 519 426
- DE-A- 3 330 667
- FR-A- 2 623 878
- US-A- 4 645 065
- PATENT ABSTRACTS OF JAPAN vol. 5 no. 90 (M-73) [762] ,12 Juin 1981 & JP-A-56 037414 (TAKUMA) 11 Avril 1981,
- PATENT ABSTRACTS OF JAPAN vol. 7 no. 50 (M-197) [1195] ,26 Février 1983 & JP-A-57 198919 (ISHIKAWAJIMA) 6 Décembre 1982,
- PATENT ABSTRACTS OF JAPAN vol. 7 no. 25 (M-190) [1170] ,2 Février 1983 & JP-A-57 180530 (KOBE) 6 Novembre 1982,
- PATENT ABSTRACTS OF JAPAN vol. 11 no. 310 (M-630) ,9 Octobre 1987 & JP-A-62 096218 (HITACHI) 2 Mai 1987,
- PATENT ABSTRACTS OF JAPAN vol. 9 no. 191 (M-402) ,7 Août 1985 & JP-A-60 056710 (HITACHI) 2 Avril 1985,
- Zement-Kalk-Gips (ZKG), 1985, Heft 2, pages 104-106, "Fördereinrichtung für Altreifen und andere Ersatz-Brennstoffe in Zementwerken", Kaldewey F

## Description

La présente invention se rapporte à une installation et à un procédé d'alimentation d'un four rotatif en déchets industriels, notamment en pneus usagés déchiquetés ou entiers.

Une telle installation est connue du document Zement-Kalk-Gips (ZKG), 1985, Heft 2, pages 104-106, "Fördereinrichtung für Altreifen und andere Ersatz-Brennstoffe in Zementwerken", Kaldewey F.

Les fours rotatifs visés sont ceux des cimenteries mais aussi de fabriques de chaux et tous les autres fonctionnant à haute température.

Tous les déchets, mais surtout les pneus usagés, constituent une source de nuisance importante pour l'environnement.

Outre l'aspect peu esthétique des tas de pneus existant à proximité des ateliers de montage ou sur les décharges, ceux-ci représentent un danger certain en raison de leur caractère inflammable.

Le peu d'applications de réutilisation de cette matière existant actuellement ne permet pas d'envisager une récupération rentable par la seule valeur du produit final.

Les produits de recyclage issus des pneus usagés ne pouvant donner lieu à des produits à valeur ajoutée satisfaisante et, devant la quantité croissante de la production de pneus usagés, qui s'amoncellent dans divers endroits, les collectivités locales, administratives et autres autorités responsables ont conclu à l'élimination par incinération directe ou par mélange dans un four industriel.

Une des applications préférées concerne les fours de cimenteries.

Les pneus usagés sont introduits en quantité dosées entiers ou déchiquetés et à débit aussi constant que possible dans le four où progresse la masse des matières utilisées pour la fabrication du ciment.

En raison de la haute température régnant dans le four, les morceaux combustibles des pneus sont immédiatement incinérés et les résidus solides mélangés à la matière pour donner naissance à un ciment amélioré.

La matière combustible dont les pneus sont principalement formés constitue un excellent combustible apportant une puissance calorifique supplémentaire au four équivalente à celle du charbon.

Les résidus de combustion constituent une charge minérale pondérale pour le ciment dont la nature et les propriétés permettent d'améliorer la composition et la qualité de certains ciments.

Si l'adjonction des pneus usagés déchiquetés dans les fours de cimenteries donne entière satisfaction, tant au niveau des qualités du ciment, qu'au niveau de la pollution, il s'avère difficile à mettre en oeuvre et à maîtriser le dosage et le chargement des morceaux déchiquetés dans le four.

En effet, de par leur forme recourbée et leur nature élastique, ces déchets en morceaux ne se prédisposent pas facilement à une manipulation et à un acheminement à flux dosé régulier comme l'exige l'alimentation additionnelle d'un four de cimenterie.

En effet, les pneus déchiquetés et plus particulièrement les déchets industriels broyés ou les résidus d'automobiles broyées ne peuvent pas être manipulés comme des produits en vrac classiques, qui sont homogènes et calibrés, en raison de leur forme et de leur grand coefficient de frottement. L'état naturel d'enchevêtrement et leur grande tendance au voûtage dans un volume restreint ne les prédisposent pas à une préhension facile ou à un déversement régulier. Au contraire, la tendance à l'imbrication est telle que les morceaux s'assemblent en paquets relativement difficile à dissocier.

Or, dans une chaîne d'approvisionnement d'un four de cimenterie, il est essentiel que les matières arrivent de façon régulière et continue. Les adjonctions brutales et ponctuelles de quantités supplémentaires de matières sont à proscrire.

Les moyens classiques de stockage-manutention formés d'un silo approvisionné par un élévateur, suivi d'un extracteur conventionnel, d'un doseur et d'un convoyeur ne peuvent convenir en raison des phénomènes de voûtage, de bourrage et de sortie par paquets observés au niveau de l'extracteur.

Dès lors, le doseur ne peut fonctionner correctement et la chaîne ne peut approvisionner régulièrement le four en déchets de matière additionnelle combustible.

Par ailleurs, la formation de voûtes dans le silo et les propriétés de friction du caoutchouc rendent particulièrement difficiles la progression vers le bas dans le silo de stockage et son extraction.

Ainsi, la régularité de sortie du silo et donc d'approvisionnement n'est pas garantie. La perturbation du four de cimenteries qui serait ainsi occasionnée entraînerait un défaut de qualité du ciment. Or, la constance de la qualité constitue pour les producteurs de ciments un facteur primordial auquel ils sont très attentifs.

Tous les inconvénients précités persistent dans le cas d'une cuve de stockage horizontale dont l'extraction s'effectue horizontalement par un tapis ou des vérins poussoirs. Le produit arrivant très irrégulièrement s'avère particulièrement difficile à doser.

La présente invention a pour but de proposer une installation et un procédé de stockage et de chargement pour l'alimentation d'un four notamment rotatif, par exemple celui d'une cimenterie ou d'une fabrique de chaux, en pneus usagés déchiquetés ou entiers qui donne toute satisfaction en ce qui concerne la régularité de l'adjonction.

Ainsi, la production du ciment ne s'en trouve nullement affectée et la qualité reste constante pendant les longues périodes de fonctionnement continu.

Pour ce faire, l'installation se compose de façon générale d'une fosse de stockage suivie d'une soute dans laquelle puise un grappin piloté par laser, d'une réserve-tampon sous la forme d'une trémie de grand volume par rapport au grappin équipée d'un détecteur de niveau. Le produit est évacué de cette trémie vers le bas par un extracteur à tablier avec tambour écrêteur qui l'emporte sur un transporteur-doseur à bande, équipé d'une bascule intégratrice associée à une commande pour réguler la vitesse de l'extracteur. Un convoyeur incliné achemine le produit vers une cheminée ou un puits d'alimentation du four.

Le procédé de manutention et d'alimentation consiste essentiellement à déverser les déchets par exemple dans une fosse, à les extraire par petites quantité et de façon contrôlée par un grappin, à charger une trémie par petites quantités jusqu'à un niveau haut, peu important, à déverser le grappin lorsque la trémie est presque vide, à extraire le produit de la trémie par un extracteur à tablier associé à un tambour écrêteur, à peser en continu la quantité de produit sur un convoyeur de transfert équipé d'une bascule intégratrice qui contrôle le débit réel et régule la vitesse de l'extracteur.

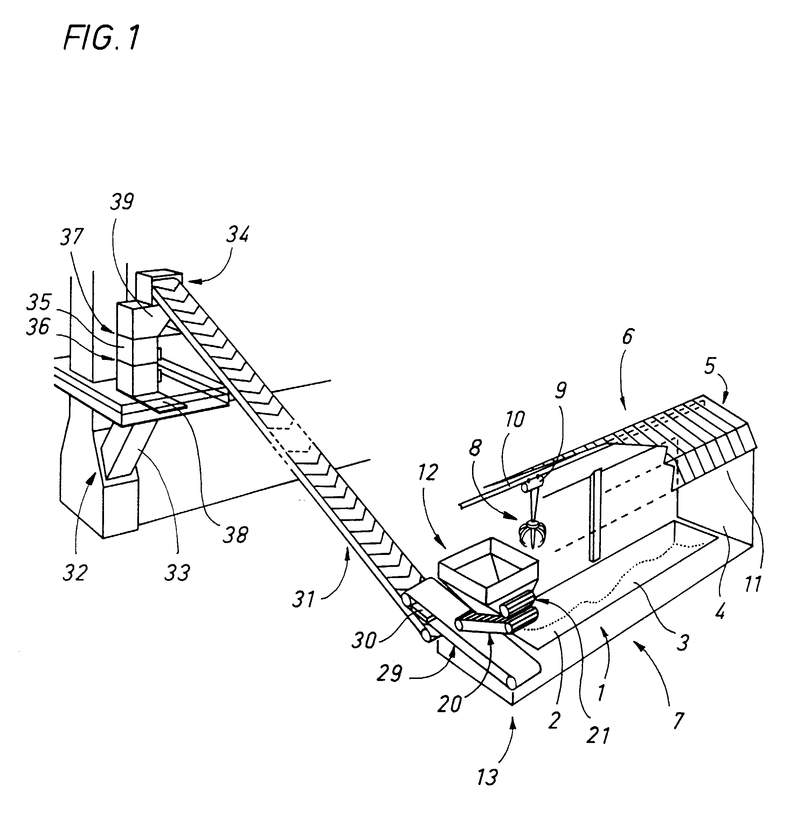

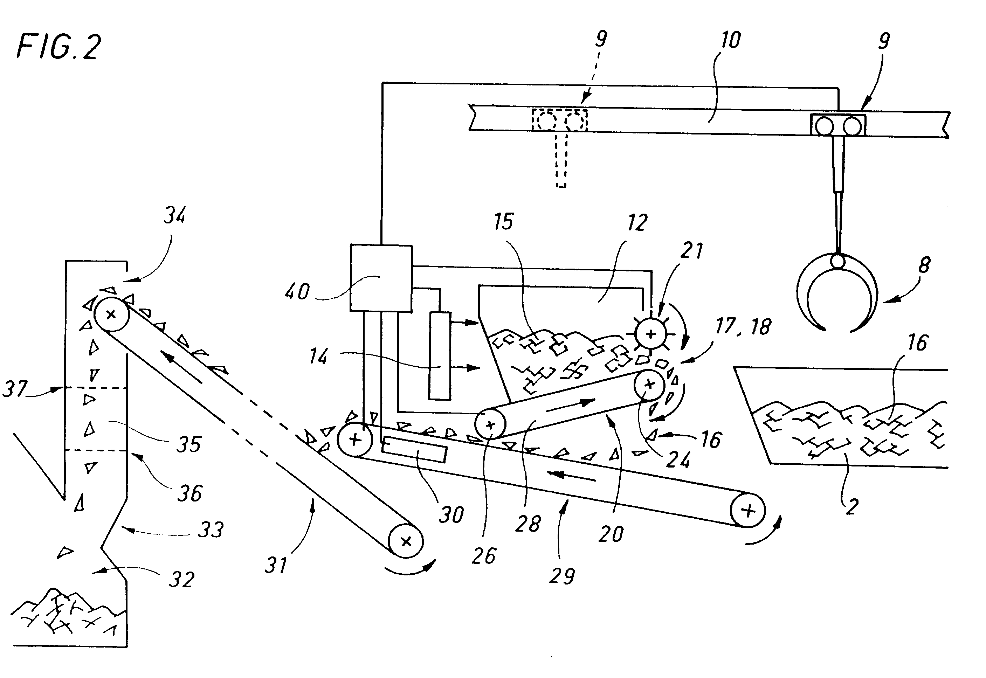

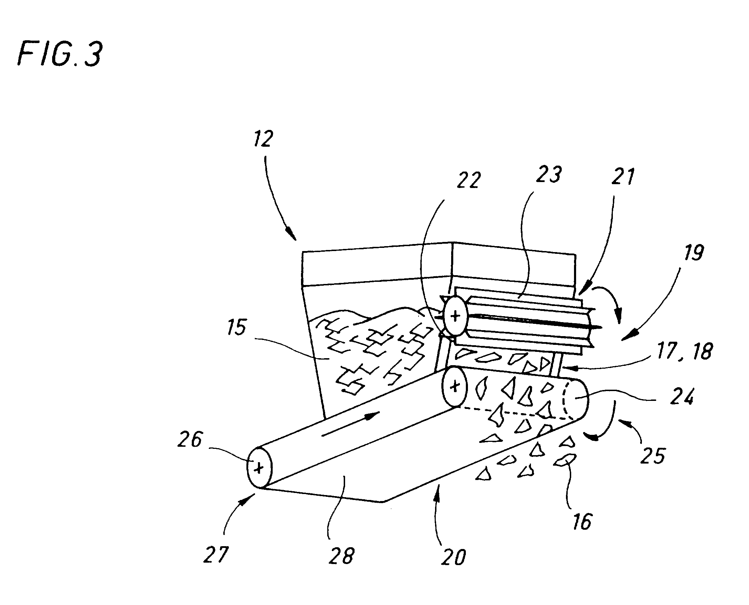

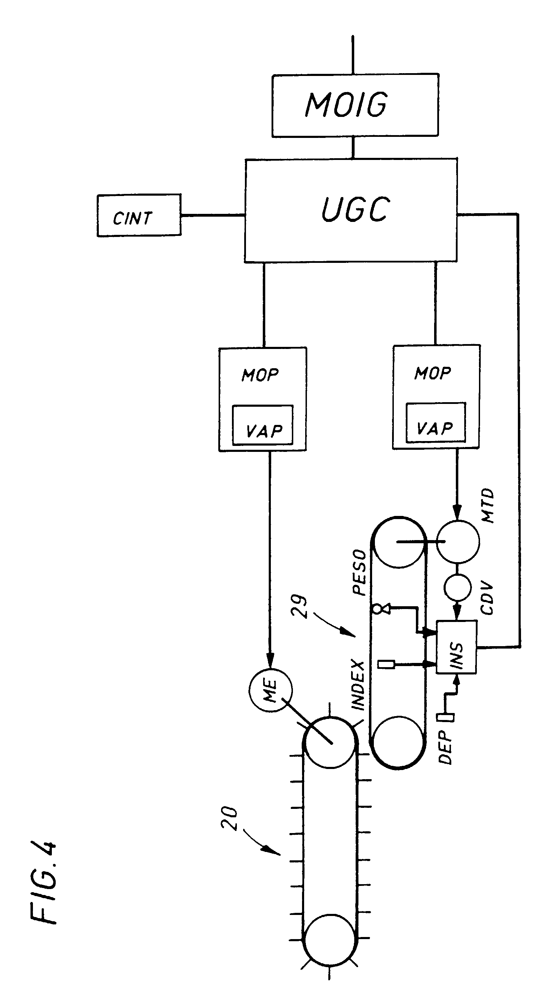

D'autres avantages apparaîtront à la lecture de la description suivante d'un mode de réalisation de l'invention effectuée à titre d'exemple uniquement en référence aux dessins accompagnants dans lesquels :
. la figure 1 est une vue schématique d'ensemble en perspective de l'installation ;
. la figure 2 est le schéma de l'ensemble de l'installation ;
. la figure 3 est une vue schématique en perspective de la trémie et de son dispositif d'évacuation ;
. la figure 4 est le schéma d'un exemple de commande de l'extracteur-doseur.

Pour la bonne compréhension de l'invention, on décrira d'abord l'installation de stockage-chargement pour fours notamment rotatifs de cimenterie ou autres.

Il convient aussi de remarquer que cette installation, en raison de sa souplesse, est particulièrement bien adaptée aux déchets formés à partir de pneus usagés, déchiquetés ou entiers, mais qu'elle peut tout aussi bien convenir à tous les autres déchets industriels dès lors qu'il présentent la moindre tendance au voûtage ou à l'enchevêtrement.

Il s'agit notamment des déchets dits R.B.A., c'est-à-dire résidus broyés d'automobiles ou D.I.B., c'est-à-dire déchets industriels broyés.

Ainsi le terme déchets doit être compris dans son sens le plus général et les pneus ne constituent qu'un exemple.

L'installation débute par une réserve principale 1, par exemple abritée, constituée par exemple d'une fosse 2 et d'une soute 3 protégées par des murs tels que 4 et une couverture 5 formant un bâtiment 6. On peut également laisser cette réserve principale 1 en plein air sans murs de protection. On peut aussi se dispenser de fosse. Elle présente une ouverture frontale 7 permettant l'accès aux camions venant déverser les déchets dans la fosse et la soute.

Au-dessus de ce volume, se déplace un grappin de préhension 8 monté sur un chariot-palan automoteur 9 le long d'un rail supérieur 10 entre une extrémité 11 de la réserve et une trémie 12 disposée au voisinage de l'autre extrémité 13 de la réserve principale 1.

Les mouvements de ce grappin 8 sont commandés par un automate en liaison avec un détecteur 14 de niveau bas ou haut et bas du volume présent dans la trémie 12 de manière à la remplir partiellement en occupant un volume minimal 15 par les morceaux 16 de pneus déchiquetés provenant du grappin 8.

A cet effet, le volume de prise du grappin 8 est choisi de façon à ne présenter qu'une petite fraction du volume total de stockage de la trémie 12.

La trémie en forme de pyramide renversée présente une sortie latérale 17 sous la forme d'une ouverture rectangulaire 18, équipée d'un dispositif évacuateur 19 formé d'un extracteur 20 à tablier coopérant avec un tambour écrêteur 21.

Le tambour écrêteur 21 est disposé en partie supérieure de l'ouverture de sortie de préférence à un emplacement tel qu'il constitue son bord supérieur 22. Il présente des nervures ou des réglettes longitudinales 23. Il tourne dans le sens opposé de sortie des produits comme indiqué par la flèche.

L'extracteur 20 à tablier est incliné à environ 30° par rapport au plan de sortie des produits.

Il est formé d'un tambour amont 24 à son extrémité avant 25 et d'un tambour aval 26 à son extrémité arrière 27 entre lesquelles circule un tablier 28.

L'extrémité avant 25 est située sensiblement à la verticale du tambour écrêteur 21.

Le sens de rotation du tambour écrêteur et l'avance de l'extracteur sont contraires comme indiqué par les flèches. Ainsi, le tambour écrêteur tourne dans le sens contraire de la sortie des produits, c'est-à-dire travaille à refouler les produits vers l'intérieur de la trémie 12 comme un organe de rabattement alors que l'extracteur 20 emporte ces mêmes produits en les évacuant vers le bas.

Cette association de moyens travaillant de cette façon procure toute satisfaction en ce qui concerne la sortie régulière des déchets, même lorsqu'ils se trouvent dans un état de forte imbrication.

Les produits peuvent ainsi sortir de la trémie par l'ouverture rectangulaire 18 à une vitesse contrôlée voisine de celle de l'extracteur car, grâce au tambour écrêteur 21, on introduit une force dynamique de refoulement qui empêche le bourrage et repousse vers l'arrière du fond de la trémie les déchets en trop présents à la sortie. Ceux-ci sont déplacés ou ramenés dans la couche d'évacuation naturelle qui s'avance en nappe par glissement vers la sortie.

C'est le rôle du tambour écrêteur 21 qui débarrasse la sortie de toute surcharge de produits occasionnant un bourrage.

L'extracteur 20 à tablier entraîne le produit hors de la trémie 12 et le déverse sur un transporteur pondéral 29 de transfert ou transporteur-doseur à bande avec éventuellement des bords de contenance, équipé en extrémité d'une bascule intégratrice 30 qui contrôle le débit réel et régule la vitesse de l'extracteur 20 et celle du transporteur 29 en fonction du débit de manière à acheminer vers le four un flux continu à débit constant de déchets.

Ce débit est souhaité le plus constant possible pour des raisons d'homogénéité de la production et de qualité du produit final.

Les déchets sont ensuite apportés au four par un ou plusieurs transporteurs classiques d'acheminement 31, par exemple à chevrons, en raison de la forte pente. Ils sont admis dans le four par une entrée auxiliaire 32 qui communique par une cheminée 33 d'alimentation secondaire avec une entrée supérieure 34, entrée dans laquelle est engagée l'extrémité du ou des transporteur(s) d'acheminement 31.

La cheminée d'alimentation 33 comporte un volume de sécurité sous la forme d'un sas de sécurité 35 d'isolation et de dépression à zones d'entrée et de sortie séparées par deux trappes 36 et 37 en raison de la haute température régnant dans le four. Elle comporte également une trappe de sécurité 38.

Par ailleurs, et de façon optionnelle, l'entrée supérieure 34 dans la cheminée est décalée par rapport au trajet vertical de chute dans la cheminée par un bloc oblique 39 pour éviter à un éventuel retour de flamme d'atteindre l'extrémité haute du transporteur d'acheminement 31.

On examinera maintenant le procédé de stockage et l'approvisionnement du four de cimenterie en pneus usés déchiquetés.

Les déchets et plus particulièrement les pneus sont amenés à l'état déchiqueté ou entiers par des camions qui déversent leur chargement dans la réserve principale 1 indifféremment dans la soute et dans la fosse ou à même le sol dans le cas d'une installation sans fosse.

Le grappin 8 dont l'endroit de prise est déterminé par des séquences optimales d'enlèvement zones par zones, vient agripper une quantité de déchets correspondant à son volume de préhension.

Le fonctionnement du grappin 8 est piloté par laser à partir d'une chaîne de commande en fonctionnement automatique. Le volume de la trémie est choisi pour que l'apport de matière constitué par une des charges du grappin n'occupe qu'une petite partie de ce volume. Le détecteur de niveau 14, bas ou haut et bas, équipant la trémie 12 fournit les signaux de commande de réapprovisionnement lorsque le volume dans la trémie atteint un niveau minimal.

Le volume de réapprovisionnement est tel que le niveau haut corresponde à une quantité de matière suffisamment faible pour que le produit se déverse, établissant ainsi les conditions d'un fonctionnement permanent dans lequel la trémie est utilisée en remplissage partiel.

On commande la vitesse de l'extracteur 20 par la bascule intégratrice 30 équipant le convoyeur pondéral de transfert 29. Elle fournit à une unité centrale 40 les indications du débit pondéral instantané qui, comparé à une consigne, agit sur la vitesse de l'extracteur 20 et sur celle du transporteur 29 en vue du maintien d'un débit pondéral donné.

Cette régulation de la vitesse a pour but de maintenir un apport continu constant et régulier en poids de matière combustible supplémentaire au four malgré la difficulté connue d'extraire régulièrement de la trémie ce type de produit ou tout produit présentant des tendances au voûtage ou à l'imbrication.

L'unité centrale 40 assure la gestion globale du débit pondéral d'alimentation d'un four à partir de ces déchets puisés dans une réserve en vue de maintenir une alimentation en flux continu constant.

Ce débit pondéral d'alimentation en pneus déchiquetés ou entiers peut être augmenté jusqu'à un apport énergétique représentant au maximum 20 % de la consommation calorifique du four.

On se réfèrera maintenant à la figure 4.

L'extracteur-doseur se compose comme déjà indiqué d'un extracteur 20 de préférence à tablier et d'un transporteur pondéral 29 ou transporteur-doseur.

Ces deux organes sont asservis en vitesse. Ainsi, la vitesse du transporteur-doseur s'adapte à la vitesse de l'extracteur ou inversement en vue de présenter à la sortie un débit constant.

Le transporteur-doseur 29 comporte un index INDEX de bande et un peson PESO décalés entre eux formant la bascule intégratrice.

Les deux capteurs fournissent des informations à une unité centrale de gestion et de contrôle UGC par l'intermédiaire d'une interface système INS qui reçoit également une tension de consigne réglable par un module DEP, par exemple de déport de la bande.

Les moteurs ME et MTD d'entraînement, respectivement de l'extracteur 20 et du transporteur-doseur 29 sont alimentés à partir de UGC à travers un module de puissance MOP comportant un variateur de puissance VAP selon une loi d'asservissement en vitesse permettant d'obtenir en sortie un débit volumique constant de produit prédéterminé selon les capacités de l'installation.

L'interface INS reçoit également un signal proportionnel du moteur MTD par un capteur de vitesse CDV qui permet de connaître la vitesse du transporteur-doseur 29 en vue de l'asservissement.

Eventuellement, un capteur supplémentaire de vitesse ou de déplacement permet de calculer le glissement de la bande par rapport à sa vitesse d'entraînement en vue d'appliquer un correctif à la régulation du débit.

Une console interactive CINT reliée à l'unité centrale UGC permet d'entrer des données, de fixer les conditions de fonctionnement et de commander manuellement l'ensemble extracteur-doseur.

Un module d'interface général MOIG permet la communication avec l'extérieur.

L'invention se rapporte également à un procédé d'approvisionnement d'un four de cimenterie en déchets, notamment en pneus usagés.

Ce procédé se particularise en ce que l'on réalise une réserve principale dans laquelle puise un grappin, que l'on alimente à capacité partielle une réserve-tampon en quantités minimales prédéterminées apportées par le grappin dont le fonctionnement est commandé à partir du niveau bas par un détecteur surveillant le niveau du produit dans la trémie, que l'on commande le grappin à partir de ces informations, que l'on régule la vitesse de l'extracteur du produit hors de la trémie à partir de l'organe de pesée, intégré au transporteur-doseur, pour que le débit en volume ou en poids soit constant, que l'on alimente le four en déversant le produit en partie haute d'une cheminée communiquant avec une entrée auxiliaire du four par l'intermédiaire d'un sas de sécurité, l'ensemble étant géré en débit pour garantir une alimentation régulière du four en pneus déchiquetés ou entiers selon un flux continu.

## Revendications

1. Installation gérée par une unité centrale pour l'alimentation d'un four rotatif, notamment de cimenterie, en déchets, par exemple en pneus usagés déchiquetés ou entiers, comprenant une réserve principale, un moyen d'amenée transférant les déchets de cette réserve principale à une réserve-tampon de laquelle ils sont évacués en quantités dosées puis repris et acheminés par un transporteur incliné vers une entrée auxiliaire d'un four caractérisé en ce qu'un grappin (8) puise dans la réserve principale pour remplir la réserve-tampon qui présenta une ouverture calibrée, d'où les déchets sortent par un dispositif d'évacuation (19) se composant d'un extracteur à tablier (20) entraîné par un moteur ME et d'un tambour écrêteur (21) formant l'extrémité supérieure de l'ouverture au-dessus de la sortie de la réserve-tampon, l'extracteur (20) et le tambour (21) tournant dans des sens différents, le premier dans le sens de sortie des produits et le second dans le sens contraire pour évacuer les produits sur un transporteur-doseur (29) à mesure du débit pondéral suivi du transporteur incliné d'acheminement (31) vers le four déversant le produit à débit pondéral constant dans une cheminée d'alimentation (33) communiquant avec une entrée auxiliaire (32) d'un four par l'intermédiaire d'un sas de sécurité (35) isolé par deux trappes.

2. Installation selon la revendication 1, caractérisée en ce que la réserve-tampon est une trémie (12) équipée d'un détecteur de niveau (14).

3. Installation selon la revendication précédente, caractérisée en ce que le détecteur de niveau est un détecteur de niveau bas.

4. Installation selon la revendication 2, caractérisée en ce que la trémie est équipée d'un détecteur de niveau haut et bas.

5. Installation selon l'une quelconque des revendications précédentes, caractérisée en ce que le transporteur-doseur (29) à mesure de débit pondéral comporte une bascule intégratrice (30) et un moteur MTD.

6. Installation selon l'une quelconque des revendications précédentes, caractérisée en ce que la vitesse de l'extracteur (20) est commandée par la bascule intégratrice (30) à travers une chaîne de régulation.

7. Installation selon la revendication précédente, caractérisée en ce que la chaîne de régulation entre l'extracteur (20) et le transporteur-doseur (29) se compose d'abord d'une interface système INS reliée à un index de bande, à un peson, à un module de déport de bande DEP et à un capteur de vitesse CDV du moteur MTD, ensuite d'une unité centrale UGC recevant une interface CINT et alimentant les moteurs ME et MTD à travers des modules de puissance MOP à variateur de puissance VAP.

8. Installation selon l'une quelconque des revendications précédentes, caractérisée en ce que l'extrémité du transporteur d'acheminement (31) à bande est décalée par rapport à la cheminée d'alimentation (33).

9. Utilisation d'une installation selon l'une des revendications 1 à 8 pour l'alimentation d'un four, notamment de cimenterie, en déchets, par exemple en pneus usagés déchiquetés ou entiers dans lequel on réalise une réserve principale caractérisé en ce que l'on alimente à capacité partielle une réserve-tampon en quantités minimales prédéterminées apportées par un grappin puisant dans la réserve centrale, grappin dont le fonctionnement est commandé à partir du niveau bas de la réserve-tampon par un détecteur surveillant le niveau du produit dans la réserve-tampon, que l'on commande le grappin à partir de ces informations, que l'on régule la vitesse de l'extracteur du produit hors de la réserve-tampon à partir de l'organe de pesée intégré au transporteur-doseur pour que le débit en poids soit constant, que l'on alimente le four en déversant le produit en partie haute d'une cheminée communiquant avec une entrée auxiliaire d'un four par l'intermédiaire d'un sas de sécurité, l'ensemble étant géré en débit pour garantir une alimentation régulière du four en pneus déchiquetés ou entiers selon un flux continu.

## Patentansprüche

1. Vorrichtung, die durch eine zentrale Einheit zur Versorgung eines Drehofens, insbesondere in einem Zementwerk, mit Abfällen, beispielsweise mit zerkleinerten oder ganzen Altreifen, gesteuert ist, mit ein Hauptlager, wobei an ein Fördermittel die Abfälle aus diesem Hauptlager in ein Pufferlager überträgt, aus dem diese in dosierten Mengen austreten, von einem Schrägförderer aufgenommen und zu einem Nebenzugang des Ofens gefördert werden, dadurch gekennzeichnet, daß ein Greifer (8) in das Hauptlager greift, um das Pufferlager zu füllen, das eine kalibrierte Öffnung aufweist, durch die die Abfälle mittels einer Ausbringeinrichtung (19) ausgebracht werden, wobei diese eine durch einen Motor (ME) angetriebenen Plattenaustrageinrichtung (20) und eine den oberen Abschluß der Öffnung oberhalb des Ausgangs des Pufferlagers bildende Begrenzungswalze (21) aufweist, wobei sich die Austrageinrichtung (20) und die Walze (21) im entgegengesetzten Sinn drehen, erstere in Ausbringrichtung der Produkte und die zweite im gegenläufigen Sinn, um die Produkte auf eine Dosier-Transporteinrichtung (29) mit Masseflußbestimmung zu verbringen, gefolgt von einem schrägen Transportförderer (31) zu dem Ofen, der das Produkt mit konstanter Massenzuführung in einen Versorgungsschacht (33) fördert, der über eine mit zwei Klappen verschlossene Sicherheitsschleuse (35) mit dem Nebenzugang (32) des Ofens verbunden ist.

2. Vorrichtung nach Anspruch 1, dadurch gekennzeichnet, daß das Pufferlager ein mit einem Füllstanddetektor (14) ausgestatteter Trichter (12) ist.

3. Vorrichtung nach Anspruch 2, dadurch gekennzeichnet, daß der Füllstanddetektor ein Minimumdetektor ist.

4. Vorrichtung nach Anspruch 2, dadurch gekennzeichnet, daß der Trichter einen Maximums- und Minimumsfüllstandanzeige aufweist.

5. Vorrichtung nach einem der Ansprüche 1 bis 4, dadurch gekennzeichnet, daß die Dosier-Transporteinrichtung (29) mit Masseflußbestimmung eine integrierte Wägeeinrichtung (30) und einen Motor (MTD) aufweist.

6. Vorrichtung nach einem der Ansprüche 1 bis 5, dadurch gekennzeichnet, daß die Geschwindigkeit der Austragseinrichtung (20) durch die integrierte Wägeeinrichtung (30) mittels eines Regelkreises gesteuert ist.

7. Vorrichtung nach Anspruch 6, dadurch gekennzeichnet, daß der Regelkreis zwischen der Austrageinrichtung (29) und der Dosier-Transporteinrichtung (29) zunächst eine mit einem Bandindex, einer Schnellwaage, mit einem Versatzmodul des Bandes (DEP) und einem Geschwindigkeitsaufnehmer (CDV) des Motors (MTD) verbundene Systemschnittstelle (INS) und des weiteren eine zentrale Einheit (UGC), die eine Schnittstelle (CINT) umfaßt und die Motoren (ME) und (MTD) mittels Leistungsmodulen (MOP) mit einem Leistungsregler (VAP) versorgt, aufweist.

8. Vorrichtung nach einem der Ansprüche 1 bis 7, dadurch gekennzeichnet, daß der Endabschnitt des Bandförderers (31) in bezug auf den Versorgungsschacht (33) versetzt ist.

9. Verwendung einer Vorrichtung nach einem der Ansprüche 1 bis 8 zur Versorgung eines Ofens, insbesondere in einem Zementwerk, mit Abfällen, beispielsweise zerkleinerten oder ganzen Altreifen, die ein Hauptlager aufweist, dadurch gekennzeichnet, daß ein Pufferlager mit einer Teilkapazität in vorbestimmten Kleinmengen, die durch einen in das Hauptlager eingreifenden Greifer zugeführt werden, versorgt wird, wobei die Funktion des Greifers ab einem Minimalfüllstand des Pufferlagers durch einen den Füllstand des Materials in dem Pufferlager überwachenden Detektor gesteuert wird, daß der Greifer ausgehend von diesen Informationen gesteuert wird, daß die Geschwindigkeit der Förderung des Materials aus dem Pufferlager heraus mittels der in die Dosier-Transporteinrichtung integrierten Wägeeinrichtung geregelt wird, um die Massenförderung konstant zu halten, daß der Ofen durch Abkippen des Materials im oberen Bereich eines mit einem durch eine Sicherheitsschleuse mit einem Nebenzugang des Ofens verbundenen Schachts versorgt wird, wobei die Einheit hinsichtlich ihres Durchsatzes gesteuert ist, um eine geregelte Versorgung des Ofens mit zerkleinerten oder ganzen Reifen mit einem konstanten Zufluß zu gewährleisten.

## Claims

1. Apparatus, controlled by a central unit, for supplying a rotary oven, particularly of a cement plant, with refuse, for example, with shredded or whole used tyres, the apparatus comprising a main store, a supply means transferring the refuse from this main store to a temporary store from which it is discharged in metered quantities and is then picked up and transported by an inclined conveyor towards an auxiliary input of an oven, characterized in that a grab (8) draws from the main store in order to fill the temporary store which has a calibrated opening from which the refuse emerges through a discharge device (19) composed of a steel plate apron extractor (20) driven by a motor ME, and of a levelling cylinder (21) forming the upper end of the opening above the outlet of the temporary store, the extractor (20) and the cylinder (21) rotating in different directions, the former in the direction of output of the products and the latter in the opposite direction, in order to discharge the products onto a metering conveyor (29) for measuring the delivery rate by weight, followed by the inclined conveyor (31) for transportation towards the oven, the inclined conveyor discharging the product, at a constant delivery rate by weight, into a supply chute (33) communicating with an auxiliary input (32) of an oven through a safety lock chamber (35) isolated by two traps.

2. Apparatus according to Claim 1, characterized in that the temporary store is a hopper (12) equipped with a level detector (14).

3. Apparatus according to the preceding claim, characterized in that the level detector is a low level detector.

4. Apparatus according to Claim 2, characterized in that the hopper is equipped with a high and low level detector.

5. Apparatus according to any one of the preceding claims, characterized in that the metering conveyor (29) measuring the delivery rate by weight comprises a weighing machine (30) with a counting scale, and a motor MTD.

6. Apparatus according to any one of the preceding claims, characterized in that the speed of the extractor (20) is controlled by the weighing machine (30) with a counting scale, by means of a regulation chain.

7. Apparatus according to the preceding claim, characterized in that the regulation chain between the extractor (20) and the metering conveyor (29) is composed, in the first place, of an interface system INS connected to a belt indicator, to a weight indicator, to a belt offset module DEP, and to a speed sensor CDV of the motor MTD and, in the second place, of a central unit UGC receiving an interface CINT and supplying the motors ME and MTD by means of power modules MOP with power variators VAP.

8. Apparatus according to any one of the preceding claims, characterized in that the end of the belt transportation conveyor (31) is offset relative to the supply chute (33).

9. Use of apparatus according to any one of Claims 1 to 8 for supplying an oven, particularly of a cement plant, with refuse, for example, with shredded or whole used tyres, in which a main store is formed, characterized in that a temporary store is supplied to partial capacity with predetermined minimal quantities supplied by a grab drawing from the central store, the operation of the grab being controlled, on the basis of the low level of the temporary store, by a detector monitoring the level of the product in the temporary store, in that the grab is controlled on the basis of this data, in that the speed of the extractor of the product from the temporary store is regulated by the weighing member incorporated in the metering conveyor so that the delivery rate by weight is constant, in that the oven is supplied by discharge of the product into the upper end of a chute communicating with an auxiliary input of an oven through a safety lock chamber, the delivery of the whole unit being controlled to ensure a regular supply of shredded or whole tyres to the oven in a continuous flow.
